# EUROPÄISCHE PATENTSCHRIFT

(11) **EP 0 353 615 B1**
(45) Veröffentlichungstag und Bekanntmachung des Hinweises auf die Patenterteilung: **23.03.1994**
(21) Anmeldenummer: 89113795.2
(22) Anmeldetag: 26.07.1989
(51) Int. Cl.: H04Q 3/545

(54) **Verfahren zur Aktualisierung von Anlagekonfigurationsdaten und von benutzerindividuellen Daten in einer Vermittlungsanlage**
Method for updating system configuration data and individual user data in a switching exchange
Procédé pour actualiser les données de configuration du système et les données individuelles d'utilisateurs dans un central de commutation

(30) Priorität: 05.08.1988 DE 3826737
(43) Veröffentlichungstag der Anmeldung: 07.02.1990
(73) Patentinhaber: SIEMENS AKTIENGESELLSCHAFT, 80333 München (DE)
(72) Erfinder: Böttger, Detlev, D-4630 Dortmund (DE); Hornung, Thomas, Dr., D-4630 Bochum 5 (DE)

(56) Entgegenhaltungen:
- US-A- 4 559 417
- US-A- 4 602 132
- NACHRICHTENTECHNISCHE ZEITSCHRIFT.N.T.Z., Band 36, Nr. 8, August 1983, Seiten512-516, Berlin, DE; H. MAY et al.: "Mikrorechnergesteuerte Reihenanlage mit Vierdrahtanschluss"

## Beschreibung

Die Erfindung betrifft ein Verfahren zur Aktualisierung von Anlagenkonfigurationsdaten und von benutzerindividuellen Daten in einer Vermittlungsanlage mit zentraler Steuerrechnereinheit, mit einem Programmspeicher, einem unter anderem Anlagenkonfigurationsdaten enthaltenden Arbeitsspeicher einem benutzerindividuelle Daten enthaltenden Kundendatenspeicher, mit einer Koppeleinrichtung, an die Teilnehmerendeinrichtungen mit Ziffern-und Funktionstasten anschließbar sind, und mit einem Anlagekomponenten verbindenden Systembus, wobei von einer mit der zentralen Steuerrechnereinheit verbundenen betriebstechnischen Einrichtung Anlagenkonfigurationsdaten und benutzerindividuelle Daten der zentralen Steuereinheit zuführbar sind, die ihr zugeführte Anlagenkonfigurationsdaten und benutzerindividuelle Daten mit im Arbeitsspeicher beziehungsweise im Kundendatenspeicher abgespeicherten Daten auf Identität und bei Nichtidentität die Änderungsdaten auf Kollision mit den abgespeicherten Daten überprüft, die ferner die Änderungsdaten bei Nichtkollision in den Arbeitsspeicher beziehungsweise in den Kundendatenspeicher einspeichert.

Neuzeitliche Vermittlungsanlagen sind unter anderem durch ihre Flexibilität hinsichtlich Anlagenkonfigurationsänderungen und Änderungen benutzerindividueller Daten gekennzeichnet. So lassen sich beispielsweise Zahl und Art der an eine Nebenstellenvermittlungsanlage anschließbarer Teilnehmerendeinrichtungen variieren und den Benutzern unterschiedliche Berechtigungen zur Inanspruchnahme von Diensten (z.B. Anrufumleitung) zuordnen. Derartige Änderungen bergen jedoch die Gefahr in sich, daß die von den Änderungen betroffenen Benutzer und auch der Anlagenbetreiber die durchgeführten Änderungen nicht oder nur zeitverzögert zur Kenntnis nehmen. Das jeweils vorliegende Dienstleistungsangebot wird so nur teilweise ausgeschöpft. Erfolglose Versuche, interne Verbindungen innerhalb einer Vermittlungsanlage herzustellen oder wegen entzogener Berechtigung nicht mehr verfügbare Dienste zu aktivieren, führen schließlich zu einen Akzeptanzabfall seitens der Benutzer.

Es ist die Aufgabe der Erfindung, bei einer Vermittlungsanlage der eingangs genannten Art die Aktualisierung von Anlagenkonfigurationsdaten und von benutzerindividuellen Daten sowohl für die von der Aktualisierung betroffenen Benutzer als auch für den Betreiber transparent zu machen.

Dies wird dadurch erreicht, daß die zentrale Steuereinheit nach dem Einschreiben der Änderungsdaten in den Arbeitsspeicher beziehungsweise in den Kundendatenspeicher die Gesamtheit der in den Arbeitsspeicher und in den Kundendatenspeicher abgespeicherten Daten nach vorgegebenen Kriterien ordnet und mindestens eine Teilmenge der nach diesen Kriterien geordneten Daten einer ersten Ausgabeeinrichtung zuführt.

Daten, die die jeweilige Konfiguration der Anlage beschreiben, sowie alle benutzerindividuellen Daten liegen zeitlich unmittelbar nach eingetretenen Änderungen zentral und abrufbereit in der Vermittlungsanlage vor. Die Zugänglichkeit der abrufbereiten bzw. von der Anlage ausgegebener Daten ergibt sich aus vorgegebenen Ordnungskriterien. So lassen sich jeweils aktuelle Teilnehmerverzeichnisse und teilnehmerendeinrichtungsindividuelle Bedienungsanleitungen unter Berücksichtigung der der betreffenden Teilnehmerendeinrichtung zugeordneten Berechtigungen erstellen. Nach einer vorteilhaften Ausführungsform der Erfindung erstellt eine Druckeinrichtung sogenannte Tastenkappen oder Tastenlabels für Funktionstasten, denen durch entsprechende betriebstechnische Anweisungen unterschiedliche Funktionen zugeordnet werden können.

Die genannten Vorteile ergeben sich nicht nur im laufenden Betrieb der Anlage, sondern bereits schon im Zuge der Erstinbetriebnahme. Das Verfahren der Erfindung ermöglicht in diesem Zusammenhang die rasche Erstellung anlagen- und benutzerspezifischer Dokumentation und beschleunigt somit die Übergabe der Anlage vom Lieferanten an den Betreiber.

Nach einer weiteren vorteilhaften Ausführungsform der Erfindung ruft eine an die Vermittlungsanlage ankoppelbare Datenverarbeitungsanlage im Arbeitsspeicher oder im Kundendatenspeicher vorliegende Anlagenkonfigurationsdaten bzw. benutzerindividuelle Daten ab, ordnet anstelle der Vermittlungsanlage diese Daten nach vorgegebenen Kriterien und führt mindestens eine Teilmenge der geordneten Daten der ersten Ausgabeinrichtung oder einer mit der Datenverarbeitungsanlage verbundenen zweiten Ausgabeeinrichtung zu. Diese Ausführungsform der Erfindung ist mit mehreren Vorteilen verbunden. Zunächst kann die Datenverarbeitungsanlage, die zusätzlich oder alternativ zur Vermittlungsanlage mit einem entsprechenden Programm zur Bearbeitung der Anlagenkonfigurationsdaten und/oder der benutzerindividuellen Daten ausgestattet ist die Vermittlungsanlage von entsprechenden Steuerungsvorgängen entlasten. Zudem ist die Datenverarbeitungsanlage über Datennetze an meherere räumlich voneinander getrennte Vermittlungsanlagen ankoppelbar, so daß sich ein besonders wirtschaftlicher Einsatz der Anlagen ergibt.

Das erfindungsgemäße Verfahren wird nachstehend anhand einer Figur erläutert.

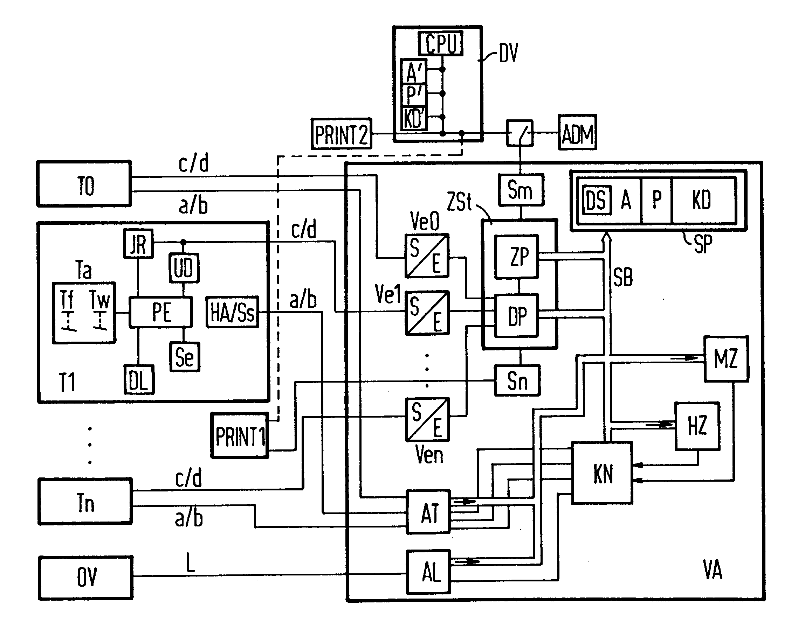

Die Figur zeigt im Blockschaltbild ausgewählte Funktionseinheiten einer Vermittlungsanlage VA, an die Teilnehmerendeinrichtungen T0...Tn angschlossen sind. Dieser Anschluß erfolgt im Ausführungsbeispiel bei einer Vermittlungsanlage, der die analoge Sprachübertragung zugrunde liegt, sternförmig über eine jeweils vieradrige Anschlußleitung, die aus einem Sprechadernpaar a/b und einem Signalisierungsadernpaar c/d besteht. Bei einem ausschließlich digitalen System sind die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden kann. Zur im wesentlichen prozeduralen Anpassung werden die Teilnehmerendeinrichtungen T0 bis Tn über eine Anschalteeinheit AT, die die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt die Verbindung über eine Anschalteeinheit AL.

Die Steuerungsaufgaben der Anlage AV übernimmt die zentrale Steuerrechnereinheit ZSt, die über einen Systembus SB mit einer Speichereinheit SP, der Anschalteeinheit AT, der Koppeleinrichtung KN und weiteren Systemkomponenten wie beispielsweise einer für die Bildung von Mehrfrequenzcodezeichen dienenden Einheit MZ und einer für die Erzeugung der Hörtöne zuständigen Einheit HZ verbunden ist. Die Aufgaben der zentralen Steuerung ZSt sind im Ausführungsbeispiel auf zwei Prozessoren ZP und DP verteilt. Der Prozessor ZP dient beispielsweise der vermittlungs- und betriebstechnischen Steuerung; durch den Prozessor DP erfolgt unter Einschaltung einer ein Sendeteil S und ein Empfangsteil E enthaltenden Verarbeitungseinheit Ve die Signalisierungsbearbeitung. Solche Verarbeitungseinheiten Ve0, ... Ven sind jeweils einem Signalisierungsadernpaar c/d zugeordnet.

Die Prozessoren ZP und DP haben über den Systembus SB Zugriff zu den in der Speichereinrichtung SP abgelegten Daten. Die Speichereinrichtung SP besteht aus einem Arbeitsspeicher A, einem Programmspeicher P und einem Kundendatenspeicher KD. Der Arbeitsspeicher A dient der Aufnahme von Anlagenkonfigurationsdaten. Im Programmspeicher P sind das Anlagenbetriebsprogramm und die zu ihm gehörigen betriebstechnischen Daten abgespeichert. In dem Speicherteil KD sind die Kundendaten wie z.B. die den einzelnen Teilnehmerendeinrichtungen T0, ... Tn zugeteilten Berechtigungen abgelegt. Das Konfigurieren dieser Daten kann z.B. über die Eingabetastatur einer als Betriebsterminal festlegbaren Endeinrichtung T0, ... Tn oder über ein gegebenenfalls vorgesehenes eigenständiges Betriebsterminal ADM erfolgen. Jede Endeinrichtung T0, ... Tn läßt sich zu einer Datenstation konfigurieren. Für eine Datenübertragung ist dann ein Modem notwendig, zu dem die a/b-Adern umgeschaltet werden. Nach Aufbau einer entsprechenden Verbindung kann dann durch eine vorgegebene Prozedur in den Zustand der Datenübertragung gewechselt werden.
Als Teileinheit des Arbeitsspeichers A können in einem Speicherteil DS diejenigen Informationen abgelegt sein, die als vermitttlungstechnische Information einem an einer Endeinrichtung angeordneten Display DL dargestellt werden sollen. Die jeweils aktuellen Signalisierungsinformationen werden abhängig von dem vermittlungstechnischen Zustand durch die zentrale Steuerrechnereinheit ZST festgelegt und aus dem Speicher DS der jeweiligen Endeinrichtung T0, ... Tn übermittelt. Diese Information kann beispielsweise eine Aussage über den Zustand der jeweiligen Endeinrichtung bzw. einer Leitung L beinhalten oder sie kann beispielsweise einen aufgrund einer vom Teilnehmer vorgenommenen Termineingabe ausgelösten Alarm betreffen.

Neben den Verarbeitungseinheiten Ve0 bis Ven können noch weitere Schnittstellen Sn und Sm vorgesehen sein, die beispielsweise hinsichtlich ihrer physikalischen Eigenschaften der CCITT-Empfehlung V24 entsprechen. Über diese Schnittstellen Sn und Sm können beispielsweise eine erste Ausgabeeinrichtung PRINT 1 beziehungsweise über ein Schaltelement ein betriebstechnisches Terminal ADM oder eine Datenverarbeitungsanlage DV, insbesondere ein Personal Computer, angeschlossen sein.

Das Terminal ADM und die Datenverarbeitungsanlage DV können auch über je eine separate Schnittstelle mit der zentralen Steuerung ZST verbunden sein.

Die Ausgabeeinrichtung PRINT 1 ist insbesondere als erste Druckeinrichtung ausgebildet, die dem Ausdruck von Daten dient, die gemäß der Erfindung beispielsweise für jede von Änderungsdaten betroffene Teilnehmerendeinrichtung T0, ... Tn gebildet werden. Als erste Druckeinrichtung kann eine ohnehin vorhandene, beispielsweise dem Ausdruck von teilnehmerendeinrichtungsbezogenen Gebührendaten dienende Druckeinrichtung verwendet werden. Die Datenverarbeitungsanlage DV kann an diese erste Druckeinrichtung PRINT 1 ankoppelbar sein oder mit einer zweiten Druckeinrichtung PRINT 2 in Verbindung stehen.

Für die Teilnehmerendeinrichtung T1 sind in der Figur einzelne Funktionskomponenten dargestellt. Über das jeweilige a/b-Adernpaar werden Sprachinformationen übertragen. Mit diesen Sprechadern ist die Sprechschaltung Ss verbunden. Sie dient in Zusammenhang mit dem Handapperat HA der Verarbeitung der übertragenen Sprachinformationen und bildet den Leitungsabschluß.

Mit der Einheit Ta ist schematisch eine Tastatur dargestellt, die mit einer in jeder Endeinrichtung T0, ... Tn zur Steuerung ihrer Funktionen vorhandenen und z.B. durch einen Prozessor realsierten Steuereinheit PE gekoppelt ist. Die Taste Tw symbolisiert eine übliche Wähltastatur. Die Taste Tf steht für eine Reihe von weiteren Tasten, insbesondere sogenannte Funktionstasten durch deren Betätgung jeweils bestimmte Funktionsabläufe aktiviert werden können. Hierzu gehören mittels des Anlagenbetriebsprogramms realisierbare Leistungsmerkmale wie z.B. das Leistungsmerkmal "Anrufumleitung". Den Funktionstasten Tf können bestimmte Funktionen fest zugeordnet sein oder alternativ hierzu frei zugeordnet werden.

Mit der Steuereinheit Pe sind ferner die Einheiten JR, UD, Se und DL verbunden. Die Einheit JR erkennt die Betätigung einzelner Tasten Tw, Tf, bildet entsprechende Signalisierungsinformationen und gibt diese über die Signalisierungsadern c/d an die Vermittlungsanlage VA oder unmittelbar an das der Teilnehmerendeinrichtung zugeordnete Display DL ab. Beispielsweise werden durch Wähltasten Tw erzeugte Anreize in graphischer Form als Ziffern auf dem Display DL dargestellt. Die Einheit UD registriert Informationen, die einer Teilnehmerendeinrichtung über die jeweiligen c/d-signalisierungsadern von der Vermittlungsanlage VA zur weiteren Verarbeitung zugeführt werden. Die Einheit Se ist als Speicher ausgebildet und dient beispielsweise der Aufnahme eines Betriebsprogramms für die Steuereinheit PE und zwischenzuspeichernder Daten.

Als Datenverarbeitungsanlage DV kann ein handelsüblicher Personal Computer verwendet werden. Die Anlage DV weist insbesondere Speichermittel A′und KD′auf, in die aus dem Arbeitsspeicher A und dem Kundendatenspeicher KD der Vermittlungsanlage VA abgerufene Anlagenkonfigurationsdaten und benutzerindividuelle Daten abspeicherbar sind. Die Steuerung CPU der Datenverarbeitungsanlage DV erfolgt mittels eines in einem Speicher P′ abgelegten Betriebsprogramms und arbeitet wie noch beschrieben wird mit der zentralen Steuerungseinheit ZSt der Vermittlungsanlage VA zusammen.

Von der mit der zentralen Steuerrechnereinheit über die Schnittstelle Sm verbundenen betriebstechnischen Einrichtung ADM oder von einer zu einer betriebstechnischen Einrichtung konfigurierten Teilnehmerendeinrichtung T0, ... Tn sind der zentralen Steuereinheit ZSt Anlagenkonfigurationsdaten und benutzerindividuelle Daten zuführbar. Die zentrale Steuereinheit ZSt überprüft diese ihr zugeführten Daten mit den bereits im Arbeitsspeicher A beziehungsweise im Kundendatenspeicher KD abgespeicherten Daten auf Identität. Üblicherweise werden der zentralen Steuereinheit keine Anlagenkonfigurationsdaten und benutzerindividuelle Daten zugeführt, die in der Anlage bereits vorliegen; vielmehr betreffen die zugeführten Daten Änderungen der Anlagenkonfiguration und benutzerindividueller Daten. Ergibt die von der zentralen Steuereinheit ZSt durchgeführte Identitätsprüfung, daß sich bereits in der Anlage vorliegende und zugeführte Daten unterscheiden, führt sie eine weitere Überprüfung durch, die eine mögliche Kollision der Änderungsdaten mit den abgespeicherten Daten ermittelt. Eine solche Kollision ergibt sich beispielsweise, wenn für eine Teilnehmerendeinrichtung ohne eine entsprechende Berechtigung das Leistungsmerkmal "Anrufschutz" aktiviert werden soll.

Ergibt die Prüfung der zentralen Steuereinheit ZSt keine Kollision, schreibt sie die ihr zugeführten Daten in den datenspezifischen Speicher ein, also Anlagenkonfigurationsdaten in den Arbeitsspeicher A und benutzerindividuelle Daten in den Kundendatenspeicher KD.

Nach dem Einschreiben dieser Änderungsdaten in den betreffenden Speicher A, KD ordnet die zentrale Steuereinheit die Gesamtheit der in dem Arbeitsspeicher A und in dem Kundendatenspeicher KD abgespeicherten Daten nach vorgegebenen Kriterien und führt mindestens eine Teilmenge der nach diesen Kriterien geordneten Daten der Ausgabeeinrichtung PRINT 1 zu. Diese Daten sind von der als Druckeinrichtung ausgebildeten Einheit PRINT 1 ausdruckbar.

Die Ordnungskriterien sowie der mengenmäßige Umfang der der Ausgabeeinrichtung PRINT 1 zuzuführenden Daten sind Eingangsparameter des im Programmspeicher P abgelegten Betriebsprogramms der zentralen Steuereinheit ZSt. Ordnungskriterien sind beispielsweise die Teilnehmerendeinrichtungen oder ausgewählte Berechtigungen. Im ersten Fall lassen sich nach einer vorteilhaften Ausführungsform der Erfindung für alle oder ausgewählte Teilnehmerendeinrichtungen mindestens eine Teilmenge aller benutzerindividuellen Daten nach einer vorgebbaren Reihenfolge ordnen. Im zweiten Fall läßt sich eine Liste erstellen, die aufgeschlüsselt nach Berechtigungen diejenigen Teilnehmerendeinrichtungen angibt, denen diese Berechtigungen zugeordnet sind.

Bei einem Anschluß neuer Teilnehmereinrichtungen, bei einem Abtrennen bisher angeschlossener Teilnehmerendeinrichtungen sowie bei einer neuen Zuordnung von Benutzern zu bestimmten Teilnehmerendeinrichtungen läßt sich auf diese Weise ein aktuelles Teilnehmerverzeichnis erstellen. Ebenso läßt sich bei einer geänderten Funktionstastenzuordnung einer bestimmten Teilnehmerendeinrichtung für diese eine neue Bedienungsanleitung erstellen, die die geänderten Funktionen berücksichtigt.

Nach einer weiteren Ausführungsform der Erfindung überprüft die zentrale Steuereinheit ZSt die Änderungsdaten bei Nichtkollision mit den ursprünglich im Arbeitsspeicher A beziehungsweise mit in dem Kundendatenspeicher KD abgespeicherten Daten darauf, ob diese Daten an den Teilnehmerendeinrichtungen T0, ... Tn angeordnete Funktionstasten betreffen, insbesondere ob frei programmierbaren Funktionstasten neue Funktionen zugeordnet werden. Bei einem positiven Ergebnis dieser Überprüfung führt die zentrale Steuereinheit ZSt, nachdem sie die Änderungsdaten in einen oder in beide genannten Speicher A, KD eingeschrieben hat und alle Funktionstasten Tf betreffende Daten nach vorgegebenen Kriterien ordnet, alle nach diesen Kriterien geordneten Daten der Ausgabeeinrichtung PRINT 1 zu.

Mit der insbesondere als Druckeinrichtung ausgebildeten ersten Ausgabeeinrichtung PRINT 1 sind die zugeführten Daten ausgelöst durch einen entsprechenden Befehl der zentralen Steuereinheit ZSt oder durch einen gesonderten externen Befehl, insbesondere durch einen manuel in die erste Ausgabeeinrichtung PRINT 1 eingegebenen Befehl ausdruckbar. Als Ordnungskriterium dient im vorliegenden Fall die räumliche Anordnung der frei programmierbaren Funktionstasten Tf einer bestimmten Teilnehmerendeinrichtung. Vorzugsweise gibt der Ausdruck das Tastenfeld mit den Tasten Tf maßstabsgetreu wieder, wobei nur diejenigen Tasten Tf dargestellt oder besonders gekennzeichnet sein können, die von der Änderung betroffen sind. Für jede von der Änderung betroffene Taste Tf wird eine Tastenkappe mit einer die Funktion kennzeichnenden alphanumerischen Abkürzung oder einem graphischen Symbol erstellt.

Die Vermittlungsanlage VA wird nach einer weiteren Ausführungsform der Erfindung durch eine an diese angekoppelte Datenverarbeitungsanlage DV hinsichtlich der Verarbeitung von Anlagenkonfigurationsdaten und/oder benutzerindividuellen Daten entlastet. Hierzu weist die an die Vermittlungsanlage VA ankoppelbare Datenverarbeitungsanlage DV Speicher A′ KD′ auf, die zur Aufnahme der in den Speichern A bzw. KD der Vermittlungsanlage VA abgelegten Daten dienen. Im Speicher P′ der Datenverarbeitungsanlage DV ist das Programm zur Bearbeitung der Anlagenkonfigurationsdaten und/oder der benutzerindividuellen Daten abgespeichert.
Die Datenverarbeitungsanlage DV ruft im Arbeitsspeicher A der Vermittlungsanlage VA vorliegende Anlagenkonfigurationsdaten und/oder im Kundendatenspeicher KD der Vermittlungsanlage VA vorliegende benutzerindividuelle Daten ab und ordnet die abgerufenen Daten nach vorgegebenen Kriterien. Im Anschluß führt sie mindestens eine Teilmenge der nach diesen Kriterien geordneten Daten der ersten Ausgabeeinrichtung PRINT 1 oder einer mit der Datenverarbeitungsanlage DV verbundenen zweiten Ausgabeeinrichtung PRINT 2 zu, die ebenso wie die erste Ausgabeeinrichtung PRINT 1 als Druckeinrichtung ausgebildet sein kann. Die Datenverarbeitungsanlage DV führt also die vorgenannten Tätigkeiten, ordnen der abgerufenen Daten nach vorgegebenen Kriterien und zuführen mindestens einer Teilmenge der geordneten Daten an eine Ausgabeeinrichtung PRINT 1 oder PRINT 2, anstelle der Vermittlungsanlage VA durch.

Die Datenverarbeitungsanlage DV kann beispielsweise zu beliebigen Zeitpunkten auf den Arbeitsspeicher A und den Kundendatenspeicher KD der Vermittlungsanlage VA zugreifen und die Inhalte dieser Speicher mit den Inhalten der entsprechenden Speicher A′ und KD′ vergleichen, wobei die jeweils aktuellen Daten der Speicher A und KD in die Speicher A′ und KD′ eingeschrieben werden.

Alternativ zu dem zu beliebigen, von der Datenverarbeitungsanlage DV bestimmbaren Zeitpunkten für den Abruf der Daten ist nach einer weiteren Ausführungsform der Erfindung vorgesehen, daß die Initiative zum Abruf von Daten von der Vermittlungsanlage VA insbesondere immer zu den Zeitpunkten ausgeht, zu denen geänderte Anlagenkonfigurationsdaten und/oder benutzerindividuelle Daten in den Arbeitsspeicher A bzw. in den Kundendatenspeicher KD eingeschrieben worden sind. Die zentrale Steuerrechnereinheit ZSt der Vermittlungsanlage VA führt also nach dem Einschreiben der Änderungsdaten in den Arbeitsspeicher A bzw. in den Kundendatenspeicher KD der Datenverarbeitungsanlage DV eine diesen Vorgang mitteilende Information zu. Ausgelöst durch diese Information ruft dann die Datenverarbeitungsanlage DV die im Arbeitsspeicher A vorliegenden Anlagenkonfigurationsdaten und/oder die im Kundendatenspeicher KD vorliegenden benutzerindividuellen Daten ab und führt diese Daten in die Speicher A′ bzw. KD′ zu. Im Anschluß hieran bearbeitet die zentrale Steuerung CPU der Datenverarbeitungsanlage DV mittels des im Speicher P′ abgespeicherten Programms die in den Speichern A′ und KD′ hinterlegten Daten nach den im Zusammenhang mit der Bearbeitung der Daten durch die Vermittlungsanlage VA genannten vorgegebenen Ordnungskriterien. Mindestens einen Teil der nach diesen Kriterien geordneten Daten werden der ersten oder zweiten Ausgabeeinrichtung PRINT 1, PRINT 2 zugeführt. Der Ausdruck der aufbereiteten Daten erfolgt dementsprechend durch die als Druckeinrichtung ausgebildete erste Ausgabeeinrichtung PRINT 1 oder durch die als zweite Druckeinrichtung ausgebildete Ausgabeeinrichtung PRINT 2.

Nach einer weiteren Ausführungsform der Erfindung arbeiten Datenverarbeitungsanlagen DV und Vermittlungsanlagen VA in der Weise zusammen, daß der Datenverarbeitungsanlage DV originär Anlagenkonfigurationsdaten und/oder benutzerindividuelle Daten über eine externe Eingabeeinrichtung zugeführt werden, wobei diese Eingabeeinrichtung durch die betriebstechnische Einrichtung ADM gebildet werden kann. Die zentrale Steuereinheit CPU der Datenverarbeitungsanlage DV überprüft diese zugeführten Daten mit Daten, die in ihrem Arbeitsspeicher A′ bzw. mit in ihrem Kundendatenspeicher KD′ abgespeichert sind auf Identität. Ergibt sich Nichtidentität, überprüft die zentrale Steuereinheit CPU die neu zugeführten Daten, die Änderungsdaten darstellen, auf Kollision mit den beiden Speichern A′ und KD′ abgespeicherten Daten. Eine solche Kollision ergibt sich wie schon im Zusammenhang der Kollisionsprüfung der zentralen Steuerung ZSt der Vermittlungsanlage VA ausgeführt, beispielsweise, wenn für eine Teilnehmerendeinrichtung ohne eine entsprechende Berechtigung das Leistungsmerkmal "Anrufschutz" aktiviert werden soll.

Bei Nichtkollision speichert die zentrale Steuerung CPU der Datenverarbeitungsanlage DV die Änderungsdaten in den Arbeitsspeicher A′ bzw. in den Kundendatenspeicher KD′ ein und übergibt den Inhalt beider Speicher A′ und KD′ der zentralen Steuereinheit ZSt der Vermittlungsanlage VA. Die Vermittlungsanlage VA schreibt die ihr zugeführten Daten unverändert in den Arbeitsspeicher A bzw. in den Kundendatenspeicher KD ein. Das Ordnen der Daten nach vorgegebenen Kriterien kann nun von der Vermittlungsanlage VA oder vorzugsweise von der Datenverarbeitungsanlage DV durchgeführt werden.

## Patentansprüche

1. Verfahren zur Aktualisierung von Anlagenkonfigurationsdaten und von benutzerindividuellen Daten in einer Vermittlungsanlage (VA) mit zentraler Steuerrechnereinheit (ZSt), mit einem Programmspeicher (P), einem unter anderem Anlagenkonfigurationsdaten enthaltenden Arbeitsspeicher (A), einem benutzerindividuelle Daten enthaltenden Kundendatenspeicher (KD), mit einer Koppeleinrichtung (KN), an die Teilnehmerendeinrichtungen (T0, T1, ... Tn) mit Ziffern (Tw) und Funktionstasten (Tf) anschließbar sind, und mit einem Anlagekomponenten (ZSt, P, A, KD, KN) verbindenden Systembus (SB), wobei von einer mit der zentralen Steuerrechnereinheit (ZST) verbundenen betriebstechnischen Einrichtung (ADM) Anlagenkonfigurationsdaten und benutzerindividuelle Daten der zentralen Steuereinheit (ZSt) zuführbar sind, die ihr zugeführte Anlagenkonfigurationsdaten und benutzerindividuelle Daten mit im Arbeitsspeicher (A) beziehungsweise im Kundendatenspeicher (KD) abgespeicherten Daten auf Identität und bei Nichtidentität die Änderungsdaten auf Kollision mit den abgespeicherten Daten überprüft, die ferner die Änderungsdaten bei Nichtkollision in den Arbeitsspeicher (A) beziehungsweise in den Kundendatenspeicher (KD) einspeichert,
**dadurch gekennzeichnet,**
daß die zentrale Steuereinheit (ZSt) nach dem Einschreiben der Änderungsdaten in den Arbeitsspeicher (A) beziehungsweise in den Kundendatenspeicher (KD) die Gesamtheit der in den Arbeitsspeicher (A) und in den Kundendatenspeicher (KD) abgespeicherten Daten nach vorgegebenen Kriterien ordnet und mindestens eine Teilmenge der nach diesen Kriterien geordneten Daten einer Ausgabeeinrichtung (PRINT 1) zuführt.

2. Verfahren nach Anspruch 1,
**dadurch gekennzeichnet,**
daß die zentrale Steuereinheit (ZSt) nach dem Einschreiben der Änderungsdaten in den Arbeitsspeicher (A) beziehungsweise in den Kundendatenspeicher (KD) die Gesamtheit der in beiden Speichern (A, KD) abgespeicherten Daten für jede von Änderungsdaten betroffene Teilnehmerendeinrichtung (T0, T1, ... Tn) nach vorgegebenen Kriterien ordnet und alle nach diesen Kriterien geordneten Daten der Ausgabeeinrichtung (PRINT 1) zuführt.

3. Verfahren nach Anspruch 2,
**dadurch gekennzeichnet,**
daß die zentrale Steuereinheit (ZSt) die Änderungsdaten bei Nichtkollision mit den ursprünglich im Arbeitsspeicher (A) beziehungsweise in dem Kundendatenspeicher (KD) abgespeicherten Daten ferner darauf überprüft, ob sie an den Teilnehmerendeinrichtungen (T0, T1, ... Tn) angeordnete Funktionstasten (Tf) betreffen, daß die zentrale Steuereinheit (ZSt) bei einem positiven Ergebnis dieser Überprüfung und nach Einschreibung der Änderungsdaten in einen oder in beide Speicher (A, KD) für jede von Funktionstasten Änderungsdaten betroffene Teilnehmerendeinrichtung (T0, T1, ... Tn) die Funktionstasten (Tf) betreffenden Daten nach vorgegebenen Kriterien ordnet und alle nach diesen Kriterien geordneten Daten der Ausgabeeinrichtung (PRINT) zuführt.

4. Verfahren nach einem der vorstehenden Ansprüche,
**dadurch gekennzeichnet,**
daß die Ausgabeeinrichtung (PRINT 1) als erste Druckeinrichtung ausgebildet ist und die zentrale Steuereinheit (ZSt) den Ausdruck der der Ausgabeeinrichtung (PRINT 1) zugeführten Daten auslöst.

5. Verfahren nach einem der Ansprüche 1 bis 3,
**dadurch gekennzeichnet,**
daß die Ausgabeeinrichtung (PRINT 1) als erste Druckeinrichtung ausgebildet ist und der Ausdruck der ihr zugeführten Daten durch einen ersten gesonderten externen Befehl auslösbar ist.

6. Verfahren nach Anspruch 1,
**dadurch gekennzeichnet,**
daß eine an die Vermittlungsanlage angekoppelte die Datenverarbeitungsanlage (DV) im Arbeitsspeicher (A) der Vermittlungsanlage (VA) vorliegende Anlagenkonfigurationsdaten und/oder im Kundendatenspeicher (KD) der Vermittlungsanlage (VA) vorliegende benutzerindividuelle Daten abruft und anstelle der Vermittlungsanlage (VA) nach vorgegebenen Kriterien ordnet und mindestens eine Teilmenge der nach diesen Kriterien geordneten Daten der ersten Ausgabeeinrichtung (PRINT 1) oder einer mit der Datenverarbeitungsanlage (DV) verbundenen zweiten Ausgabeeinrichtung (PRINT 2) zuführt.

7. Verfahren nach Anspruch 6,
**dadurch gekennzeichnet,**
daß die zentrale Steuerrechnereinheit (ZSt) der Vermittlungsanlage (VA) nach dem Einschreiben der Änderungsdaten in den Arbeitsspeicher (A) bzw. in den Kundendatenspeicher (KD) der Datenverarbeitungsanlage (DV) eine diesen Vorgang mitteilende Information zuführt und daß die Datenverarbeitungsanlage (DV) ausgelöst durch diese Information die im Arbeitsspeicher (A) vorliegenden Anlagenkonfigurationsdaten und/oder die im Kundendatenspeicher (KD) vorliegenden benutzerindividuellen Daten abruft.

8. Verfahren nach Anspruch 6 oder 7,
**dadurch gekennzeichnet,**
daß die zweite Ausgabeeinrichtung (PRINT 2) als zweite Druckeinrichtung ausgebildet ist und der Ausdruck der ihr zugeführten Daten durch einen zweiten gesonderten externen Befehl auslösbar ist.

9. Verfahren nach einem der Ansprüche 6 bis 8,
**dadurch gekennzeichnet,**
daß der Datenverarbeitungsanlage (DV) originär Anlagenkonfigurationsdaten und/oder benutzerindividuelle Daten über eine externe Eingabeeinrichtung zugeführt werden, daß eine zentrale Steuereinheit (CPU) der Datenverarbeitungsanlage (DV) diese zugeführten Daten mit in einem Arbeitsspeicher (A′) beziehungsweise mit in einem Kundendatenspeicher (KD′) der Datenverarbeitungsanlage (DV) abgespeicherten Daten auf Identität und bei Nichtidentität die Änderungsdaten auf Kollision mit den abgespeicherten Daten überprüft, daß die zentrale Steuerung (CPU) der Datenvermittlungsanlage (DV) die Änderungsdaten bei Nichtkollision in den Arbeitsspeicher (A′) beziehungsweise in den Kundendatenspeicher (KD′) einspeichert und den Inhalt beider Speicher ( A, ′KD′) der zentralen Steuereinheit (ZSt) der Vermittlungsanlage (VA) übergibt.

## Claims

1. Method for updating system configuration data and individual user data in a switching system (VA) having a central control processor unit (ZSt), having a program memory (P), a main memory (A) containing, inter alia, system configuration data, a customer data memory (KD) containing individual user data, having a switching network (KN) to which the subscriber terminals (T0, T1, ... Tn) with digits (Tw) and function keys (Tf) can be connected, and having a system bus (SB) that connects system components (ZSt, P, A, KD, KN), it being possible for system configuration data and individual user data to be supplied to the central control unit (ZSt) from an operations-oriented device (ADM) connected to the central control processor unit (ZSt), which central control unit checks whether the system configuration data and individual user data supplied to it are identical to data stored in the main memory (A) and in the customer data memory (KD) respectively, and if they are not identical checks the amended data for collision with the stored data, and which furthermore stores the amended data in the main memory (A) or in the customer data memory (KD) respectively in the case of non-collision, characterized in that after the amended data has been written into the main memory (A) or into the customer data memory (KD) respectively, the central control unit (ZSt) orders all the data stored in the main memory (A) and in the customer data memory (KD) according to predetermined criteria and supplies at least some of the data ordered according to said criteria to an output device (PRINT 1).

2. Method according to Claim 1, characterized in that after the amended data has been written into the main memory (A) or into the customer data memory (KD) respectively, the central control unit (ZSt) orders all the data stored in both memories (A, KD) according to predetermined criteria for each subscriber terminal (T0, T1, , ... Tn) affected by amended data and supplies all the data ordered according to said criteria to the output device (PRINT 1).

3. Method according to Claim 2, characterized in that in the case of non-collision with the data originally stored in the main memory (A) or in the customer data memory (KD) respectively, the central control unit (ZSt) furthermore checks the amended data as to whether they affect function keys (Tf) arranged at the subscriber terminals (T0, T1, ... Tn), in that in the case of a positive result for this check and after the amended data have been written into one or into both memories (A, KD), for each subscriber terminal (T0, T1, ... Tn) affected by function keys amended data, the central control unit (ZSt) orders the data affecting function keys (Tf) according to predetermined criteria and supplies all the data ordered according to said criteria to the output device (PRINT).

4. Method according to one of the preceding claims, characterized in that the output device (PRINT 1) is designed as a first printing device and the central control unit (ZSt) triggers the printing out of the data supplied to the output device (PRINT 1).

5. Method according to one of Claims 1 to 3, characterized in that the output device (PRINT 1) is designed as a first printing device and the printing out of the data supplied to it can be triggered by a first separate external command.

6. Method according to Claim 1, characterized in that a data processing system (DV) coupled to the switching system calls up system configuration data stored in the main memory (A) of the switching system (VA) and/or individual user data stored in the customer data memory (KD) of the switching system (VA) and orders them according to predetermined criteria instead of the switching system (VA), and supplies at least some of the data ordered according to said criteria to the first output device (PRINT 1) or to a second output device (PRINT 2) connected to the data processing system (DV).

7. Method according to Claim 6, characterized in that after writing the amended data into the main memory (A) or into the customer data memory (KD), the central control processor unit (ZSt) of the switching system (VA) supplies information notifying this operation to the data processing system (DV), and in that, triggered by this information, the data processing system (DV) calls up the system configuration data stored in the main memory (A) and/or the individual user data stored in the customer data memory (KD).

8. Method according to Claim 6 or 7, characterized in that the second output device (PRINT 2) is designed as a second printing device and the printing out of the data supplied to it can be triggered by a second separate external command.

9. Method according to one of Claims 6 to 8, characterized in that system configuration data and/or individual user data are originally supplied to the data processing system (DV) via an external input device, in that a central control unit (CPU) of the data processing system (DV) checks whether said supplied data are identical to data stored in a main memory (A') or stored in a customer data memory (KD') respectively of the data processing system (DV), and if they are not identical checks the amended data for collision with the stored data, and in that in the case of non-collision the central controller (CPU) of the data switching system (DV) stores the amended data in the main memory (A') or in the customer data memory (KD') respectively, and passes the contents of both memories (A', KD') to the central control unit (ZSt) of the switching system (VA).

## Revendications

1. Procédé pour actualiser des données de configuration d'une installation et des données individuelles d'utilisateurs dans une installation de commutation (VA) comportant une unité centrale formant calculateur de commande (ZSt), une mémoire de programme (P), une mémoire de travail (A) qui contient notamment des données de configuration de l'installation, une mémoire (KD) des données des clients contenant des données individuelles d'utilisateurs, un dispositif de couplage (KN), auquel les terminaux d'abonnés (T0, T1... Tn) comportant des chiffres (Tw) et des touches fonctionnelles (Tm) peuvent être raccordés, et un bus système (SB), qui relie des composants (ZSt, P, A, KD, KN) de l'installation, et selon lequel des données de configuration de l'installation et des données individuelles d'utilisateurs peuvent être envoyées par un dispositif technique de service (ADM), qui est relié à l'unité centrale formant calculateur de commande (ZST), à l'unité centrale de commande (ZSt), qui contrôle l'identité des données de configuration de l'installation et des données individuelles d'utilisateurs, qui lui sont envoyées, avec des données mémorisées dans la mémoire de travail (A) ou dans la mémoire (KD) des données des clients et, en cas de non identité, une vérification est exécutée pour savoir si les données de modification n'entrent pas en collision avec les données mémorisées, et qui en outre, dans le cas d'une non collision, mémorise les données de modification dans la mémoire de travail (A) ou dans la mémoire (KD) des données des clients,
caractérisé par le fait
que d'après l'enregistrement des données de modification dans la mémoire de données (A) ou dans la mémoire (KD) des données des clients, l'unité centrale de commande (ZSt) range la totalité des données mémorisées dans la mémoire de travail (A) et dans la mémoire (KD) des données des clients, selon des critères prédéterminés et envoie au moins une partie des données rangées selon ces critères, à un dispositif de sortie (PRINT 1).

2. Procédé suivant la revendication 1, caractérisé par le fait qu'après l'enregistrement des données de modification dans la mémoire de travail (A) ou dans la mémoire (KD) des données des clients, l'unité centrale de commande (ZSt) range la totalité des données, mémorisées dans les deux mémoires (A, KD), pour chaque terminal d'abonné (T0, T1,... Tn), concernées par des données de modification, selon des critères prédéterminés et envoie toutes les données rangées selon ces critères, au dispositif de sortie (PRINT 1).

3. Procédé suivant la revendication 2, caractérisé par le fait que l'unité centrale de commande (ZSt) vérifie en outre les données de modification en cas de non collision avec les données mémorisées à l'origine dans la mémoire de travail (A) ou dans la mémoire (KD) des données des clients, pour savoir si elles concernent des touches fonctionnelles (Tf) disposées dans les terminaux d'abonnés (T0, T1, ... Tn), que dans le cas d'un résultat positif de ce contrôle et après enregistrement des données de mémorisation dans l'une des mémoire (A, KD) ou dans ces deux mémoires, l'unité centrale de commande (ZSt) range, pour chaque terminal d'abonné (T0, T1, ... Tn) concerné par des données de modification de touches fonctionnelles, des données concernant les touches fonctionnelles (Tf) selon des critères prédéterminés et envoie toutes les données rangées selon ces critères, au dispositif de sortie (PRINT).

4. Procédé suivant l'une des revendications précédentes, caractérisé par le fait que le dispositif de sortie (PRINT 1) est agencé sous la forme d'un premier dispositif d'impression et que l'unité centrale de commande (ZSt) déclenche l'impression des données envoyées au dispositif de sortie (PRINT 1).

5. Procédé suivant l'une des revendications 1 à 3, caractérisé par le fait que le dispositif de sortie (PRINT 1) est agencé sous la forme d'un premier dispositif d'impression et que la sortie des données, qui lui sont envoyées, peut être déclenchée par une première instruction externe particulière.

6. Procédé suivant la revendication 1, caractérisé par le fait qu'une installation de traitement de données (DV), couplée à l'installation de commutation, appelle des données de configuration de l'installation, qui sont présentes dans la mémoire de travail (A) de l'installation de commutation (VA), et/ou des données individuelles d'utilisateurs, qui sont présentes dans la mémoire (KD) des données de clients de l'installation de commutation (VA), et à la place de l'installation de commutation (VA), les range selon des critères prédéterminés et envoie au moins une partie des données rangées selon ces critères, au premier dispositif de sortie (PRINT 1) ou à un second dispositif de sortie (PRINT 2) relié à l'installation de traitement de données (DV).

7. Procédé suivant la revendication 6, caractérisé par le fait qu'après l'enregistrement des données de modification dans la mémoire de travail (A) ou dans la mémoire (KD) des données des clients, l'unité centrale formant calculateur de commande (ZSt) de l'installation de commutation (VA) envoie à l'installation de traitement de données (DV) une information communiquant ce processus et que, déclenchée par cette information, l'installation de traitement de données (DV) appelle les données de configuration de l'installation, qui sont présentes dans la mémoire de travail (A), et/ou les données individuelles d'utilisateurs, qui sont présentes dans la mémoire (KD) des données des clients.

8. Procédé suivant la revendication 6 ou 7, caractérisé par le fait que le second dispositif de sortie (PRINT 2) est agencé sous la forme d'un second dispositif d'impression et que l'impression des données, qui lui sont envoyées, peut être déclenchée par une seconde instruction externe particulière.

9. Procédé suivant l'une des revendications 6 à 8, caractérisé par le fait que des données de configuration de l'installation et/ou des données individuelles d'utilisateurs sont envoyées initialement à l'installation de traitement (DV) par l'intermédiaire d'un dispositif d'entrée externe, qu'une unité centrale de commande (CPU) de l'installation de traitement de donnée (DV) contrôle l'identité de ces données envoyées par les données mémorisées dans la mémoire de travail (A') ou à des données mémorisées dans une mémoire (KD') des données de clients de l'installation de traitement de données (DV), et en cas de non identité, vérifie les données de modification pour voir si elles sont en collision avec les données mémorisées, que, en cas de non collision, l'unité centrale de commande (CPU) de l'installation de traitement de données (DV) mémorise les données de modification dans la mémoire de travail (A') ou dans la mémoire (KD') des données des clients et transfère le contenu des deux mémoires (A', KD') à l'unité centrale de commande (ZSt) de l'installation de commutation (VA).
